# FASCICULE DE BREVET EUROPEEN

(11) **EP 2 393 682 B1**
(45) Date de publication et mention de la délivrance du brevet: **03.08.2016**
(21) Numéro de dépôt: 10701705.5
(22) Date de dépôt: 02.02.2010
(51) Int. Cl.: F25B 15/06, B60H 1/32

(54) **SYSTEME DE REFROIDISSEMENT A ABSORPTION**
SYSTEM ZUM KÜHLEN DURCH ABSORPTION
SYSTEM FOR COOLING BY ABSORPTION

(30) Priorité: 05.02.2009 FR 0950703
(43) Date de publication de la demande: 14.12.2011
(73) Titulaire: Bacqueyrisses - S.A., 33520 Bruges (FR)
(72) Inventeur: NIEDDU, Giovanni, F-33700 Merignac (FR)
(74) Mandataire: Ipside
(86) Numéro de dépôt international: PCT/EP2010/051258
(87) Numéro de publication internationale: WO 2010/089300

(56) Documents cités:
- WO-A-2006/013407
- FR-A- 2 805 493
- US-A- 5 896 747
- US-A- 6 128 917

## Description

La présente invention concerne un système de refroidissement à absorption particulièrement adapté à réaliser un dispositif de climatisation de véhicule automobile et notamment de véhicule de transport en commun.

Les systèmes de refroidissement à absorption utilisent une source chaude et une solution réfrigérante comportant un mélange binaire comme de l'eau et un sel tel que le bromure de lithium.

Le document WO2006/013407 décrit un tel système pour lequel les échanges permettant le fonctionnement du système de refroidissement sont des échanges de vapeur entre d'une part un bouilleur ou séparateur et un condenseur et d'autre part un évaporateur et un absorbeur, un échangeur de chaleur régulant les températures de la solution pauvre allant du séparateur/bouilleur vers l'absorbeur et de la solution riche allant de l'absorbeur au séparateur/bouilleur.

Un tel système qui repose sur un échangeur de chaleur dans lequel les solutions riche en eau et pauvre en eau sont réchauffée et refroidie ne permet pas d'optimiser simplement les fonctionnements du séparateur/condenseur.

La présente invention a pour objectif de réaliser un système de refroidissement à absorption pour lequel le fonctionnement du condenseur est optimisé et dans lequel les fonctionnements des organes d'évaporation/absorption et séparation/condensation sont aisément contrôlables au moyen d'une régulation des transferts de fluide entre une partie haute pression et une partie basse pression du système.

Pour ce faire, la présente invention propose un système de refroidissement par absorption, pour véhicule à moteur thermique, comportant un circuit haute pression pourvu d'un ensemble séparateur/condenseur, un circuit basse pression pourvu d'un ensemble évaporateur/absorbeur, pour lequel le circuit haute pression comporte au niveau du condenseur dudit ensemble séparateur/condenseur une boucle de circulation et de refroidissement d'eau condenseur comportant un piquage sur le condenseur, un échangeur air/eau de refroidissement, une pompe de circulation condenseur et un moyen gicleur de retour au condenseur.

La présente invention propose en outre un procédé de pilotage d'un système de refroidissement par absorption, ledit système comportant un circuit haute pression pourvu d'un ensemble séparateur/condenseur, un circuit basse pression pourvu d'un ensemble évaporateur/absorbeur, le circuit haute pression comportant une boucle de circulation et de refroidissement d'eau condenseur munie d'un échangeur air/eau de refroidissement, d'une pompe de circulation condenseur et d'un moyen gicleur dans la branche retour du condenseur dudit ensemble séparateur/condenseur, le circuit basse pression comportant une boucle de circulation d'eau évaporateur comprenant une pompe de circulation évaporateur et un moyen gicleur, la boucle de circulation et de refroidissement d'eau condenseur comportant une dérivation, vers la boucle de circulation eau évaporateur, munie d'une électrovanne d'alimentation du circuit basse pression disposée entre la sortie de la pompe de circulation condenseur et la sortie de la pompe de circulation évaporateur caractérisé en ce qu'on fait circuler le liquide de la boucle de circulation et de refroidissement d'eau condenseur du circuit haute pression en alimentant la pompe de circulation condenseur et on fait circuler le liquide de la boucle de circulation d'eau évaporateur en alimentant la pompe de circulation évaporateur, électrovanne d'alimentation du circuit basse pression fermée et en ce qu'on alimente le circuit basse pression à partir du circuit haute pression en ouvrant l'électrovanne d'alimentation du circuit basse pression.

En outre la présente invention prévoit un procédé de pilotage d'un système de refroidissement par absorption, ledit système comportant un circuit haute pression pourvu d'un ensemble séparateur/condenseur, un circuit basse pression pourvu d'un ensemble évaporateur/absorbeur, l'ensemble séparateur/condenseur comprenant une enceinte de séparation alimentée par un circuit de chauffage comportant une boucle de chauffage d'une solution binaire séparateur maintenue liquide munie d'un piquage de sortie sur le séparateur, d'une pompe du circuit de chauffage, d'au moins un échangeur de chaleur en liaison avec au moins l'un des circuit de refroidissement du moteur thermique et échappement du moteur thermique et d'un piquage d'entrée sur le séparateur, le circuit basse pression comportant une boucle de circulation liquide absorbeur munie d'un piquage sur l'absorbeur, d'une pompe de circulation absorbeur d'un échangeur air/eau de refroidissement et d'un moyen gicleur de retour à l'absorbeur, la boucle de circulation liquide absorbeur comportant une dérivation vers le circuit de chauffage pilotée par une électrovanne d'alimentation du circuit de chauffage disposée entre la sortie de la pompe de circulation absorbeur et la sortie de la pompe du circuit de chauffage caractérisé en ce qu'on fait circuler le liquide de la boucle de chauffage du circuit haute pression en alimentant la pompe du circuit de chauffage et on fait circuler le liquide de la boucle de circulation liquide absorbeur en alimentant la pompe de circulation absorbeur, électrovanne d'alimentation du circuit basse pression fermée et en ce qu'on alimente le circuit haute pression à partir du circuit basse pression en ouvrant l'électrovanne d'alimentation du circuit haute pression tout en ralentissant ou arrêtant la pompe du circuit de chauffage.

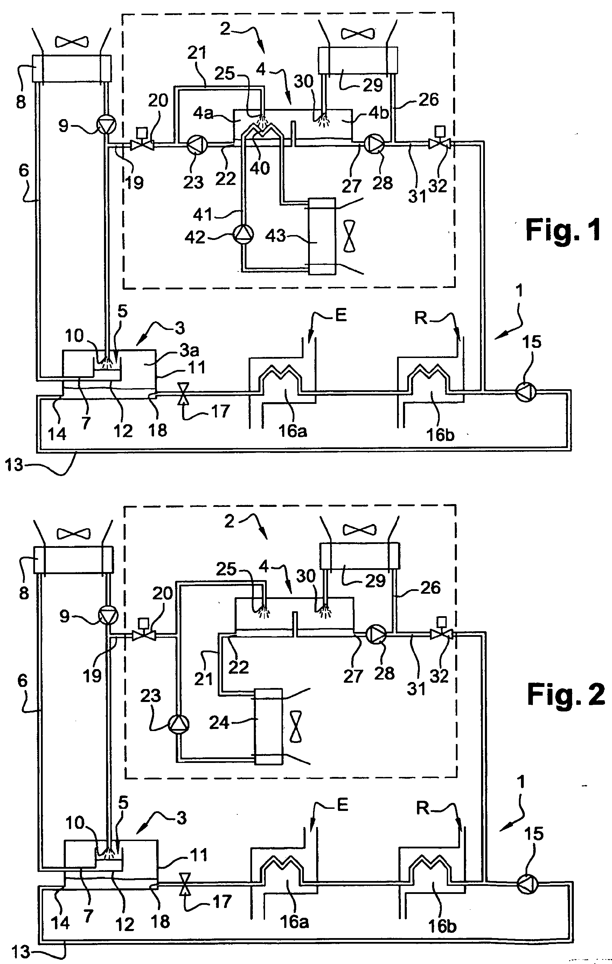

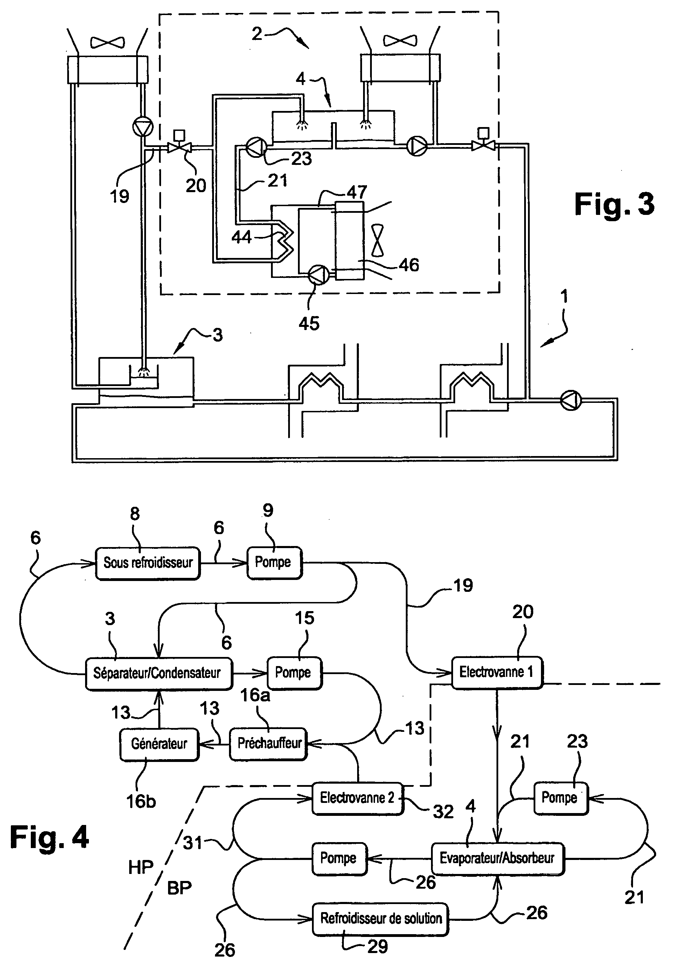

D'autres caractéristiques et avantages de l'invention seront apparents à la lecture de la description qui suit d'exemples non limitatifs de l'invention en référence aux dessins qui représentent:
en figure 1: un schéma d'un premier exemple de réalisation d'un système de refroidissement par absorption selon l'invention;
aux figures 2 et 3: deux variantes du système de refroidissement de la figure 1;
en figure 4: un schéma représentant les circulations de liquide dans un système selon l'invention.

Le système selon l'invention est basé sur le principe de limiter les transferts gazeux sur des distances les plus courtes possibles et de réaliser des transferts de liquides entre les organes distants.

Comme pour les systèmes de refroidissement par absorption de l'état de l'art, le système de la présente invention utilise une solution telle qu'une solution eau, bromure de lithium dans un circuit pratiquement sous vide et comporte un étage d'hydratation de la solution dans un absorbeur avec dégagement de chaleur et un étage de déshydratation de la solution.

Le système comporte une partie de circuit dit haute pression dans lequel les pressions sont de l'ordre de quelques centièmes à quelques dixièmes de bars, de 0,02 à 0,5 bars par exemple et une partie de circuit dit basse pression dans laquelle les pressions sont de l'ordre de quelques millièmes à quelques centièmes de bars, de 0,002 à 0,005 bars par exemple.

Ces faibles pressions permettent au système de fonctionner en favorisant les passages entre phase vapeur et la phase liquide de l'eau.

La figure 1 représente dans ce cadre, un premier exemple de réalisation d'un système de refroidissement par absorption, pour véhicule à moteur thermique selon l'invention.

Selon la figure 1, le système comporte un circuit haute pression 1 qui est pourvu d'un ensemble séparateur/condenseur 3.

L'ensemble séparateur/condenseur comporte une enceinte de séparation 11 et un réceptacle 12 de condensation, le réceptacle de condensation étant disposé dans l'enceinte de séparation.

Selon l'invention, le circuit haute pression comporte au niveau du condenseur 5 dudit ensemble séparateur/condenseur une boucle 6 de circulation et de refroidissement d'eau condenseur comportant un piquage 7 sur le condenseur, un échangeur air/eau de refroidissement 8, une pompe 9 de circulation condenseur et un moyen gicleur 10 de retour au condenseur.

Le fonctionnement du séparateur/condenseur est le suivant.

Le séparateur est une enceinte dans laquelle règne une pression de l'ordre de 0,02 bars.

Cette enceinte est alimentée en solution eau bromure de lithium chauffée de sorte que l'eau puisse se vaporiser dans l'enceinte.

La séparation est réalisée par la liquéfaction de la vapeur se trouvant dans l'enceinte au moyen du condenseur.

L'enceinte de séparation est alimentée par un circuit de chauffage comportant une boucle de chauffage 13 d'une solution binaire maintenue liquide, munie d'un piquage 14 de sortie sur le séparateur, d'un pompe 15 du circuit de chauffage, d'au mois un échangeur de chaleur 16a, 16b en liaison avec au moins l'un des circuit de refroidissement R du moteur thermique et échappement E du moteur thermique et d'un piquage d'entrée 18 sur le séparateur.

L'enceinte de séparation 11 est adaptée pour faire bouillir la solution binaire alors que la boucle de chauffage est conçue pour maintenir la solution liquide entre la pompe 15 et le piquage 18 par la pression de la pompe 15.

Un ordre de grandeur pour la pression dans cette partie du circuit est de 0,4 à 0,5 bars.

Un élément détendeur 17 en amont du piquage 18 de retour séparateur permet une réduction de la pression en entrée du séparateur à une valeur de l'ordre de 0,02 bars permettant la vaporisation de l'eau de la solution.

Le condenseur qui va capter la vapeur émise par le séparateur fonctionne au moyen de la boucle 6 de circulation et de refroidissement qui se termine par le moyen gicleur 10 de retour au condenseur qui débouche dans l'enceinte de séparation 11 et forme des gouttelettes d'eau, refroidies par l'échangeur de refroidissement 8 et entraînant la vapeur dans le réceptacle de condensation.

De manière non limitative selon l'exemple, le réceptacle 12 de condensation est disposé au dessus d'un réservoir de liquide en fond de l'enceinte de séparation 11 et le moyen gicleur est disposé au dessus du réceptacle.

La température de l'eau dans la branche de retour de la boucle de refroidissement et de condensation est de l'ordre de 40 à 50 °C alors que la température de la vapeur dans l'enceinte du séparateur est de l'ordre de 80°C ce qui permet la liquéfaction de la vapeur au niveau du condenseur.

La pression dans la boucle de circulation et de refroidissement condenseur est maintenue par la pompe 9 de circulation condenseur à une valeur suffisante pour pulvériser les gouttelettes dans le gicleur 10, la pompe 9 exerçant une pression sur l'eau dans la boucle 6 depuis sa sortie jusqu'au gicleur 10 et le piquage 19.

Lors du fonctionnement de la partie haute pression, la solution circulant dans l'enceinte de séparation s'appauvrit en eau et la quantité d'eau pure dans le réceptacle et la boucle de circulation condenseur croît.

Il est donc nécessaire de prévoir un moyen permettant de prélever de l'eau au niveau de la boucle de circulation et de refroidissement condenseur et un moyen permettant de réhydrater la solution du circuit séparateur comme il sera vu plus loin.

Le système de l'invention comporte un circuit basse pression 2 pourvu d'un ensemble évaporateur/absorbeur 4.

Ce circuit comporte une boucle 26 de circulation liquide absorbeur munie d'un piquage 27 sur l'absorbeur, d'une pompe 28 de circulation absorbeur, d'un échangeur air/eau de refroidissement 29 et d'un moyen gicleur 30 de retour à l'absorbeur.

Dans cette boucle circule une solution de bromure de lithium qui va s'hydrater par captage de vapeur émise par l'évaporateur.

Cette hydratation échauffe la solution ce qui impose de refroidir la solution au moyen de l'échangeur air/eau de refroidissement 29.

La pression dans l'ensemble évaporateur/absorbeur est très faible de l'ordre de 0,002 à 0,004 bars.

Côté évaporateur, le circuit basse pression comporte une boucle 21 de circulation d'eau évaporateur comportant un piquage 22 en sortie d'évaporateur, une pompe 23 de circulation évaporateur et un gicleur 25 d'évaporateur.

C'est au niveau de l'évaporateur que le système produit du froid par vaporisation, de l'eau du circuit évaporateur.

Selon le mode de réalisation de la figure 1, le froid produit est récupéré par un circuit d'extraction, où circule un liquide caloporteur, comportant un circuit 41 de réfrigération pourvu d'un échangeur interne 40 dans l'évaporateur, une pompe 42 et un échangeur eau/air 43 distribuant de l'air refroidi dans l'habitacle du véhicule.

Selon le mode de réalisation de la figure 2, le froid produit est récupéré au niveau de la boucle évaporateur par l'ajout dans cette boucle d'un échangeur air/eau 24.

Selon le mode de réalisation de la figure 3, le froid produit au niveau de l'évaporateur est récupéré au niveau de la boucle 21 de circulation eau évaporateur au moyen d'un premier échangeur 44 et amené à un échangeur eau/air 46 par un circuit frigorifique 47 dont la circulation est assurée par une pompe 45.

La figure 4 schématise les zones haute pression HP et basse pression BP du système de l'invention.

Selon cette figure on constate que les deux circuits sont reliés au niveau de deux points de passage constitués par les électrovannes 20, 32.

L'ensemble séparateur/condenseur comporte une boucle 6 refroidie dans laquelle circule de l'eau pure et une boucle chauffée 13 dans laquelle circule de la solution eau + bromure de lithium, un transfert progressif d'eau se faisant de la boucle chauffée vers la boucle refroidie au niveau du séparateur/condenseur.

L'échangeur air/eau de la boucle 6 refroidie a une fonction de sous refroidisseur pour cette boucle.

L'ensemble évaporateur/absorbeur comporte aussi deux boucles, une boucle refroidie au niveau de l'absorbeur qui s'enrichit en eau au détriment d'une boucle au niveau de l'évaporateur qui fournit en outre le froid produit par le système.

Dans le circuit haute pression, les échangeurs 16a, 16b sont chaînés l'échangeur 16a sur le circuit de refroidissement du moteur fonctionnant en préchauffeur, l'échangeur 16b sur l'échappement du moteur du véhicule fonctionnant en générateur de chaleur proprement dit.

Lors du fonctionnement du système, il est nécessaire de régulièrement transférer de l'eau s'accumulant dans la boucle 6 de refroidissement d'eau condenseur vers la boucle 23 de l'évaporateur dont l'eau se vaporise et est transférée vers l'absorbeur.

De même, la boucle 26 de refroidissement de solution absorbeur s'enrichit progressivement en eau alors que la boucle de chauffage séparateur s'appauvrit en eau, un transfert de solution riche en eau de la boucle 26 vers la boucle 23 est donc nécessaire pour réguler les concentrations des solutions.

Pour réaliser le transfert d'eau pure de la boucle condenseur vers la boucle évaporateur, la boucle 6 de circulation et de refroidissement d'eau condenseur comporte une dérivation 19 vers le circuit basse pression pilotée par une électrovanne 20 d'alimentation du circuit basse pression.

L'électrovanne 20 d'alimentation du circuit basse pression est disposée en aval de la pompe 9 de circulation condenseur pour qu'une partie de l'eau circulant dans la boucle 26, puisse s'écouler en ouvrant l'électrovanne vers le circuit basse pression au niveau de la boucle 21 du séparateur.

Plus particulièrement, selon les modes de réalisation des figures 1 à 3, l'électrovanne 20 d'alimentation du circuit basse pression est disposée entre la pompe 9 de circulation condenseur et la pompe 23 de circulation évaporateur.

Afin de transférer de l'eau de la boucle 6 à la boucle 21 on ouvre l'électrovanne 20 et on maintient pendant le temps d'ouverture de l'électrovanne 20 la pression de la pompe 9 supérieure à la pression de la pompe 23.

Ainsi, le pilotage du système de refroidissement par absorption comportant au niveau du circuit haute pression une boucle 6 de circulation et de refroidissement d'eau condenseur et, au niveau du circuit basse pression, une boucle 21 de circulation d'eau évaporateur, la boucle 6 de circulation et de refroidissement d'eau condenseur comportant une dérivation 19, vers la boucle de circulation eau évaporateur munie d'une électrovanne 20 d'alimentation du circuit basse pression disposée entre la sortie de la pompe 9 de circulation condenseur et la sortie de la pompe 23 de circulation évaporateur est tel qu'on fait circuler le liquide de la boucle 6 de circulation et de refroidissement d'eau condenseur du circuit haute pression en alimentant la pompe 9 de circulation condenseur et on fait circuler le liquide de la boucle 21 de circulation d'eau évaporateur en alimentant la pompe 23 de circulation évaporateur, électrovanne 20 d'alimentation du circuit basse pression fermée et tel qu'on alimente le circuit basse pression à partir du circuit haute pression en ouvrant l'électrovanne 20 d'alimentation du circuit basse pression.

Pour effectuer les transferts de solution riche en eau depuis la boucle 26 absorbeur vers la boucle 13 de chauffage séparateur, la boucle 26 de circulation liquide absorbeur comporte une dérivation 31 vers le circuit de chauffage pilotée par une électrovanne 32 d'alimentation du circuit haute pression.

L'électrovanne 32 d'alimentation du circuit haute pression est disposée en aval de la pompe 28 de circulation absorbeur.

Plus particulièrement, selon les figures 1 à 3, l'électrovanne 32 d'alimentation du circuit haute pression est disposée entre la pompe 28 de circulation absorbeur et la pompe 15 du circuit de chauffage.

II est à noter que selon les modes de réalisation représentés, ces deux pompes sont en opposition et, comme la pression dans le circuit absorbeur est plus faible que la pression dans le circuit de chauffage séparateur, il est nécessaire, pour effectuer les transferts de solution du circuit basse pression vers le circuit haute pression, de stopper la pompe 15 du circuit de chauffage lorsque l'électrovanne 32 est ouverte ou de maintenir la pression de la pompe 28 de circulation absorbeur supérieure à la pression de la pompe 15 du circuit de chauffage. Ceci est par exemple réalisé en accélérant la pompe 28.

Ainsi le procédé de pilotage d'un système de refroidissement par absorption comprenant au niveau du circuit haute pression une boucle de chauffage 13 d'une solution binaire séparateur maintenue liquide, au niveau du circuit basse pression, une boucle 26 de circulation liquide absorbeur, la boucle 26 de circulation liquide absorbeur comportant une dérivation 31 vers le circuit de chauffage pilotée par une électrovanne 32 d'alimentation du circuit de chauffage disposée entre la sortie de la pompe 28 de circulation absorbeur et la sortie de la pompe 15 du circuit de chauffage est tel qu'on fait circuler le liquide de la boucle 13 de chauffage du circuit haute pression en alimentant la pompe 15 du circuit de chauffage et on fait circuler le liquide de la boucle 26 de circulation liquide absorbeur en alimentant la pompe 28 de circulation absorbeur, électrovanne 32 d'alimentation du circuit basse pression fermée, et tel qu'on alimente en solution riche en eau le circuit haute pression 1 à partir du circuit basse pression 2 en ouvrant l'électrovanne 32 d'alimentation du circuit haute pression tout en maintenant la pression de la pompe 28 supérieure à la pression de la pompe 15 le temps de l'ouverture de l'électrovanne 32 d'alimentation du circuit de chauffage.

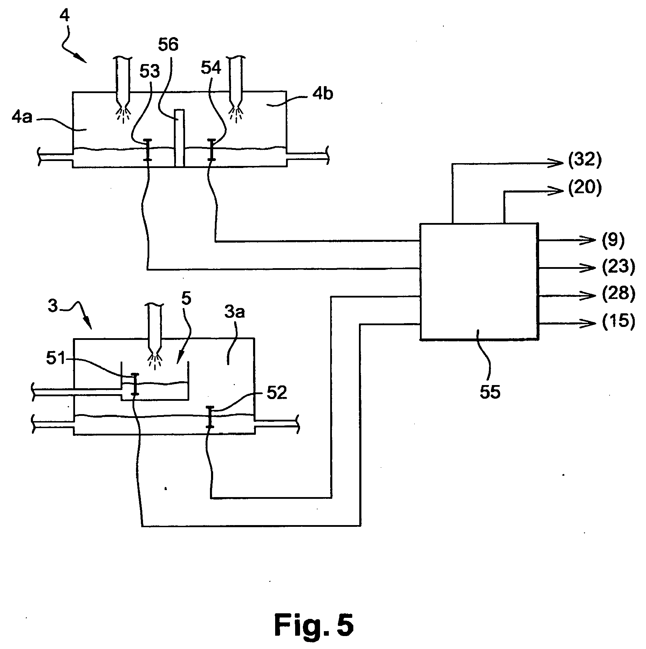

La figure 5 illustre des moyens adaptés à permettre la régulation du système. Ces moyens sont réalisés par des capteurs de niveau 50, 51, 52, 53 dans les réservoirs de liquide des ensembles séparateur/condenseur 3 et évaporateur/absorbeur 4 et un calculateur 55 comportant des sorties de commande des pompes 9, 15, 23, 28 et des électrovannes 20, 32 pour réguler les débits au niveau des différentes boucles et piloter les transferts d'eau pure du condenseur 5 vers l'évaporateur 4a au moyen de l'électrovanne 20 haute pression vers basse pression et les transferts de solution riche en eau de l'absorbeur 4b vers l'évaporateur 3a par l'électrovanne 32 basse pression vers haute pression.

Au niveau de l'évaporateur le gicleurs 25 se comporte comme une restriction causant une détente et un refroidissement de l'eau dont une partie se vaporise et se dirige vers l'absorbeur. La température de la boucle évaporateur passe au niveau de l'évaporateur d'une dizaine de degré à quelques degrés par exemple de 12 à 5 °C.

Pour éviter ou limiter un échauffement de l'évaporateur par l'absorbeur, une cloison thermiquement isolante 56 sépare ces deux éléments tout en laissant un passage pour la vapeur.

Côté condenseur, la boucle de circulation et de refroidissement, constitue un sous refroidisseur.

La régulation apportée par le système de pilotage est adaptée pour maintenir le volume d'eau et de solution dans les différents organes du système et pour réaliser un passage forcé d'un circuit à l'autre lorsqu'une compensation des volumes est nécessaire.

Un tel fonctionnement pour lequel le système est équilibré par des actions d'ouvertures et de fermetures des électrovannes diffère des systèmes libres pour lesquels les transferts se font par différentiels de pression notamment entre le circuit haute pression et le circuit basse pression.

Côté eau pure de la boucle condenseur le système fonctionne avec des phases de remplissage électrovanne 20 fermée et des phases de vidange vers le circuit évaporateur par l'ouverture de l'électrovanne 20. Les transferts d'eau du condenseur vers l'évaporateur sont pilotés par l'électrovanne 20.

Côté solution de la boucle absorbeur le système fonctionne avec des phases d'enrichissement en eau de la solution électrovanne 32 fermée et des phases de vidange vers la boucle de chauffage séparateur électrovanne 32 ouverte.

Le forçage du passage de la solution enrichie en eau est réalisé par une régulation des pompes de la boucle absorbeur et de la boucle de chauffage et le pilotage de l'électrovanne 32 de transfert de la partie basse pression vers la partie haute pression du système.

## Revendications

1. - Système de refroidissement par absorption, pour véhicule à moteur thermique, comportant un circuit haute pression (1), pourvu d'un ensemble séparateur/condenseur (3), un circuit basse pression (2), pourvu d'un ensemble évaporateur/absorbeur (4), **caractérisé en ce que** le circuit haute pression comporte au niveau du condenseur (5) dudit ensemble séparateur/condenseur une boucle (6) de circulation et de refroidissement d'eau condenseur comportant un piquage (7) sur le condenseur, un échangeur air/eau de refroidissement (8), une pompe (9) de circulation condenseur et un moyen gicleur (10) de retour au condenseur.

2. - Système de refroidissement par absorption selon la revendication 1 pour lequel l'ensemble séparateur/condenseur comporte une enceinte de séparation (11) et un réceptacle (12) de condensation, le réceptacle de condensation étant disposé dans l'enceinte de séparation.

3. - Système de refroidissement par absorption selon la revendication 2 pour lequel le moyen gicleur (10) de retour au condenseur débouche dans l'enceinte de séparation (11).

4. - Système de refroidissement par absorption selon la revendication 3 pour lequel le réceptacle (12) due condensation est disposé au dessus d'un réservoir de liquide en fond de l'enceinte de séparation (11) le moyen gicleur étant disposé au dessus du réceptacle.

5. - Système de refroidissement par absorption selon l'une quelconque des revendications précédentes pour lequel l'enceinte de séparation est alimentée par un circuit de chauffage comportant une boucle de chauffage (13), d'une solution binaire maintenue liquide, munie d'un piquage (14) de sortie sur le séparateur, d'un pompe (15) du circuit de chauffage, d'au mois un échangeur de chaleur (16a, 16b) en liaison avec au moins l'un des circuit de refroidissement (R) du moteur thermique et échappement (E) du moteur thermique et d'un piquage d'entrée (18) sur le séparateur.

6. - Système de refroidissement par absorption selon la revendication 5 pour lequel l'enceinte de séparation (11) est adaptée pour faire bouillir la solution binaire.

7. - Système de refroidissement par absorption selon l'une quelconque des revendications précédente pour lequel la boucle (6) de circulation. et de refroidissement d'eau condenseur comporte une dérivation (19) vers le circuit basse pression pilotée par une électrovanne (20) d'alimentation du circuit basse pression.

8. - Système de refroidissement par absorption selon la revendication 7 pour lequel l'électrovanne (20) d'alimentation du circuit basse pression est disposée en aval de la pompe (9) de circulation condenseur.

9. - Système de refroidissement par absorption selon la revendication 7 ou 8 pour lequel le circuit basse pression (2) pourvu de l'ensemble évaporateur/absorbeur (4) comporte une boucle (26) de circulation liquide absorbeur munie d'un piquage (27) sur l'absorbeur, d'une pompe (28) de circulation absorbeur, d'un échangeur air/eau de refroidissement (29) et d'un moyen gicleur (30) de retour à l'absorbeur.

10. - Système de refroidissement par absorption selon la revendication 9 pour lequel la boucle (26) de circulation liquide absorbeur comporte une dérivation (31) vers le circuit de chauffage pilotée par une électrovanne (32) d'alimentation du circuit haute pression.

11. - Système de refroidissement par absorption selon la revendication 10 pour lequel l'électrovanne (32) d'alimentation du circuit haute pression est disposée en aval de la pompe (28) de circulation absorbeur.

12. - Système de refroidissement par absorption selon les revendications 5 et 10 pour lequel l'électrovanne (32) d'alimentation du circuit haute pression est disposée entre la pompe (28) de circulation absorbeur et la pompe (15) du circuit de chauffage.

13. - Système de refroidissement par absorption selon l'une quelconque des revendications précédentes pour lequel le circuit basse pression comporte une boucle (21) de circulation d'eau évaporateur comportant un piquage (22) en sortie d'évaporateur, une pompe (23) de circulation évaporateur et un gicleur (25) d'évaporateur.

14. - Système de refroidissement par absorption selon les revendications 8 et 13 pour lequel l'électrovanne (20) d'alimentation du circuit basse pression est disposée entre la pompe (9) de circulation condenseur et la pompe (23) de circulation évaporateur.

15. - Procédé de pilotage d'un système de refroidissement par absorption, ledit système comportant un circuit haute pression (1) pourvu d'un ensemble séparateur/condenseur (3), un circuit basse pression (2) pourvu d'un ensemble évaporateur/absorbeur (4), le circuit haute pression comportant une boucle (6) de circulation et de refroidissement d'eau condenseur munie d'un échangeur air/eau (8) de refroidissement, d'une pompe (9) de circulation condenseur et d'un moyen gicleur (10) dans la branche retour du condenseur (5) dudit ensemble séparateur/condenseur (3), le circuit basse pression comportant une boucle (21) de circulation d'eau évaporateur comprenant une pompe (23) de circulation évaporateur et un moyen gicleur (25), la boucle (6) de circulation et de refroidissement d'eau condenseur comportant une dérivation (19), vers la boucle de circulation eau évaporateur, munie d'une électrovanne (20) d'aliméntation du circuit basse pression disposée entre la sortie de la pompe (9) de circulation condenseur et la sortie de la pompe (23) de circulation évaporateur **caractérisé en ce qu'**on fait circuler le liquide de la boucle (6) de circulation et de refroidissement d'eau condenseur du circuit haute pression en alimentant la pompe (9) de circulation condenseur et on fait circuler le liquide de la boucle (21) de circulation d'eau évaporateur en alimentant la pompe (23) de circulation évaporateur, électrovanne(20) d'alimentation du circuit basse pression fermée et **en ce qu'**on alimente le circuit basse pression à partir du circuit haute pression en ouvrant l'électrovanne (20) d'alimentation du circuit basse pression.

16. - Procédé de pilotage d'un système de refroidissement par absorption selon la revendication 15 pour lequel pour alimenter le circuit basse pression et transférer de l'eau de la boucle (6) de refroidissement et de circulation d'eau condenseur à la boucle (21) de circulation d'eau évaporateur on ouvre l'électrovanne (20) et on maintient pendant le temps d'ouverture de l'électrovanne (20) la pression de la pompe (9) de circulation condenseur supérieure à la pression de la pompe (23) de circulation évaporateur.

17. - Procédé de pilotage d'un système de refroidissement par absorption, ledit système comportant un circuit haute pression (1) pourvu d'un ensemble séparateur/condenseur (3), un circuit basse pression (2) pourvu d'un ensemble évaporateur/absorbeur (4), l'ensemble séparateur/condenseur comprenant une enceinte (11) de séparation alimentée par un circuit de chauffage comportant une boucle de chauffage (13) d'une solution binaire séparateur maintenue liquide munie d'un piquage (14) de sortie sur le séparateur, d'une pompe (15) du circuit de chauffage, d'au moins un échangeur de chaleur (16a, 16b) en liaison avec au moins l'un des circuit de refroidissement (R) du moteur thermique et échappement (E) du moteur thermique et d'un piquage (18) d'entrée sur le séparateur, le circuit basse pression comportant une boucle (26) de circulation liquide absorbeur munie d'un piquage (27) sur l'absorbeur, d'une pompe (28) de circulation absorbeur d'un échangeur air/eau (29) de refroidissement et d'un moyen gicleur (30) de retour à l'absorbeur, la boucle (26) de circulation liquide absorbeur comportant une dérivation (31) vers le circuit de chauffage pilotée par une électrovanne (32) d'alimentation du circuit de chauffage disposée entre la sortie de la pompe (28) de circulation absorbeur et la sortie de la pompe (15) du circuit de chauffage **caractérisé en ce qu'**on fait circuler le liquide de la boucle (13) de chauffage du circuit haute pression en alimentant la pompe (15) du circuit de chauffage et on fait circuler le liquide de la boucle (26) de circulation liquide absorbeur en alimentant la pompe (28) de circulation absorbeur, électrovanne (32) d'alimentation du circuit basse pression fermée et **en ce qu'**on alimente le circuit haute pression (1) à partir du circuit basse pression (2) en ouvrant l'électrovanne (32) d'alimentation du circuit haute pression tout en maintenant la pression de la pompe (28) de circulation absorbeur supérieure à la pression de la pompe (15) du circuit de chauffage le temps de l'ouverture de l'électrovanne (32) d'alimentation du circuit de chauffage.

## Patentansprüche

1. Absorptionskühlsystem für ein Fahrzeug mit Verbrennungsmotor, das einen mit einer Separator/Kondensator-Einheit (3) versehenen Hochdruckkreis (1), einen mit einer Verdampfer/Absorber-Einheit (4) versehenen Niederdruckkreis (2) aufweist, **dadurch gekennzeichnet, dass** der Hochdruckkreis im Bereich des Kondensators (5) der Separator/KondensatorEinheit eine Kondensator-Wasserumwälz- und kühlschleife (6) aufweist, die einen Anschluss (7) auf dem Kondensator, einen Luft/Kühlwasser-Tauscher (8), eine Kondensator-Umwälzpumpe (9) und eine Rücklaufdüseneinrichtung (10) zum Kondensator aufweist.

2. Absorptionskühlsystem nach Anspruch 1, bei dem die Separator/Kondensator-Einheit ein Trenngehäuse (11) und einen Kondensationsbehälter (12) aufweist, wobei der Kondensationsbehälter im Trenngehäuse angeordnet ist.

3. Absorptionskühlsystem nach Anspruch 2, bei dem die Rücklaufdüseneinrichtung (10) zum Kondensator in das Trenngehäuse (11) mündet.

4. Absorptionskühlsystem nach Anspruch 3, bei dem der Kondensationsbehälter (12) über einem Flüssigkeitstank am Boden des Trenngehäuses (11) angeordnet ist, wobei die Düseneinrichtung über dem Aufnahmebehälter angeordnet ist.

5. Absorptionskühlsystem nach einem der vorhergehenden Ansprüche, bei dem das Trenngehäuse von einem Heizkreis versorgt wird, der eine Heizschleife (13) einer flüssig gehaltenen Binärlösung aufweist, die mit einem Ausgangsanschluss (14) auf dem Separator, mit einer Pumpe (15) des Heizkreises, mit mindestens einem Wärmetauscher (16a, 16b) in Verbindung mit mindestens einem vom Kühlkreis (R) des Verbrennungsmotors und Auspuff (E) des Verbrennungsmotors und mit einem Eingangsanschluss (18) auf dem Separator versehen ist.

6. Absorptionskühlsystem nach Anspruch 5, bei dem das Trenngehäuse (11) geeignet ist, die Binärlösung sieden zu lassen.

7. Absorptionskühlsystem nach einem der vorhergehenden Ansprüche, bei dem die Kondensator-Wasserumwälz- und kühlschleife (6) eine Abzweigung (19) zum Niederdruckkreis aufweist, die von einem Elektroventil (20) zur Versorgung des Niederdruckkreises gesteuert wird.

8. Absorptionskühlsystem nach Anspruch 7, bei dem das Elektroventil (20) zur Versorgung des Niederdruckkreises hinter der Kondensator-Umwälzpumpe (9) angeordnet ist.

9. Absorptionskühlsystem nach Anspruch 7 oder 8, bei dem der mit der Verdampfer/Absorber-Einheit (4) versehene Niederdruckkreis (2) eine Absorberflüssigkeit-Umwälzschleife (26) aufweist, die mit einem Anschluss (27) auf dem Absorber, mit einer Absorber-Umwälzpumpe (28), mit einem Luft/Kühlwasser-Tauscher (29) und mit einer Rücklaufdüseneinrichtung (30) zum Absorber versehen ist.

10. Absorptionskühlsystem nach Anspruch 9, bei dem die Absorberflüssigkeit-Umwälzschleife (26) eine Abzweigung (31) zum Heizkreis aufweist, die von einem Elektroventil (32) zur Versorgung des Hochdruckkreises gesteuert wird.

11. Absorptionskühlsystem nach Anspruch 10, bei dem das Elektroventil (32) zur Versorgung des Hochdruckkreises hinter der Absorber-Umwälzpumpe (28) angeordnet ist.

12. Absorptionskühlsystem nach den Ansprüchen 5 und 10, bei dem das Elektroventil (32) zur Versorgung des Hochdruckkreises zwischen der Absorber-Umwälzpumpe (28) und der Pumpe (15) des Heizkreises angeordnet ist.

13. Absorptionskühlsystem nach einem der vorhergehenden Ansprüche, bei dem der Niederdruckkreis eine Verdampfer-Wasserumwälzschleife (21) aufweist, die einen Anschluss (22) auf dem Verdampferausgang, eine Verdampfer-Umwälzpumpe (23) und eine Verdampferdüse (25) aufweist.

14. Absorptionskühlsystem nach den Ansprüchen 8 und 13, bei dem das Elektroventil (20) zur Versorgung des Niederdruckkreises zwischen der Kondensator-Umwälzpumpe (9) und der Verdampfer-Umwälzpumpe (23) angeordnet ist.

15. Verfahren zum Steuern eines Absorptionskühlsystems, wobei das System einen mit einer Separator/Kondensator-Einheit (3) versehenen Hochdruckkreis (1), einen mit einer Verdampfer/Absorber-Einheit (4) versehenen Niederdruckkreis (2) aufweist, wobei der Hochdruckkreis eine Kondensator-Wasserumwälz- und kühlschleife (6) aufweist, die mit mit einem Luft/Kühlwasser-Tauscher (8), mit einer Kondensator-Umwälzpumpe (9) und mit einer Düseneinrichtung (10) in den Rückzweig des Kondensators (5) der Separator/Kondensator-Einheit (3) versehen ist, wobei der Niederdruckkreis eine Verdampfer-Wasserumwälzschleife (21) aufweist, die eine Verdampfer-Umwälzpumpe (23) und eine Düseneinrichtung (25) enthält, wobei die Kondensator-Wasserumwälz- und kühlschleife (6) eine Abzweigung (19) zur Verdampfer-Wasserumwälzschleife aufweist, die mit einem Elektroventil (20) zur Versorgung des Niederdruckkreises versehen ist, das zwischen dem Ausgang der Kondensator-Umwälzpumpe (9) und dem Ausgang der Verdampfer-Umwälzpumpe (23) angeordnet ist, **dadurch gekennzeichnet, dass** die Flüssigkeit der Kondensator-Wasserumwälz- und kühlschleife (6) des Hochdruckkreises umgewälzt wird, indem die Kondensator-Umwälzpumpe (9) versorgt wird, und die Flüssigkeit der Verdampfer-Wasserumwälzschleife (21) umgewälzt wird, indem die Verdampfer-Umwälzpumpe (23) versorgt wird, bei geschlossenem Elektroventil (20) zur Versorgung des Niederdruckkreises, und der Niederdruckkreis ausgehend vom Hochdruckkreis versorgt wird, indem das Elektroventil (20) zur Versorgung des Niederdruckkreises geöffnet wird.

16. Verfahren zum Steuern eines Absorptionskühlsystems nach Anspruch 15, bei dem zur Versorgung des Niederdruckkreises und für den Transfer des Wassers von der Kondensator-Wasserkühl- und umwälzschleife (6) zur Verdampfer-Wasserumwälzschleife (21) das Elektroventil (20) geöffnet und während der Öffnungszeit des Elektroventils (20) der Druck der Kondensator-Umwälzpumpe (9) höher als der Druck der Verdampfer-Umwälzpumpe (23) gehalten wird.

17. Verfahren zum Steuern eines Absorptionskühlsystems, wobei das System einen mit einer Separator/Kondensator-Einheit (3) versehenen Hochdruckkreis (1), einen mit einer Verdampfer/Absorber-Einheit (4) versehenen Niederdruckkreis (2) aufweist, wobei die Separator/Kondensator-Einheit ein Trenngehäuse (11) enthält, das von einem Heizkreis versorgt wird, der eine Heizschleife (13) einer flüssig gehaltenen Separator-Binärlösung enthält, die mit einem Ausgangsanschluss (14) auf dem Separator, mit einer Pumpe (15) des Heizkreises, mit mindestens einem Wärmetauscher (16a, 16b) in Verbindung mit mindestens einem vom Kühlkreis (R) des Verbrennungsmotors und Auspuff (E) des Verbrennungsmotors und mit einem Eingangsanschluss (18) auf dem Separator versehen ist, wobei der Niederdruckkreis eine Absorberflüssigkeit-Umwälzschleife (26) aufweist, die mit einem Anschluss (27) auf dem Absorber, mit einer Absorber-Umwälzpumpe (28), mit einem Luft/Kühlwasser-Tauscher (29) und mit einer Rücklaufdüseneinrichtung (30) zum Absorber versehen ist, wobei die Absorberflüssigkeit-Umwälzschleife (26) eine Abzweigung (31) zum Heizkreis aufweist, die von einem Elektroventil (32) zur Versorgung des Heizkreises gesteuert wird, das zwischen dem Ausgang der Absorber-Umwälzpumpe (28) und dem Ausgang der Pumpe (15) des Heizkreises angeordnet ist, **dadurch gekennzeichnet, dass** die Flüssigkeit der Heizschleife (13) des Hochdruckkreises umgewälzt wird, indem die Pumpe (15) des Heizkreises versorgt wird, und die Flüssigkeit der Verdampfer-Absorberflüssigkeit-Umwälzschleife (26) umgewälzt wird, indem die Absorber-Umwälzpumpe (28) versorgt wird, bei geschlossenem Elektroventil (32) zur Versorgung des Niederdruckkreises, und dass der Hochdruckkreis (1) ausgehend vom Niederdruckkreis (2) versorgt wird, indem das Elektroventil (32) zur Versorgung des Hochdruckkreises geöffnet wird, während der Druck der Absorber-Umwälzpumpe (28) während der Öffnungszeit des Elektroventils (32) zur Versorgung des Heizkreises höher als der Druck der Pumpe (15) des Heizkreises gehalten wird.

## Claims

1. Absorption cooling system, for vehicles with heat engines, comprising a high-pressure circuit (1), provided with a separator/condenser assembly (3), a low-pressure circuit (2), provided with an evaporator/ absorber assembly (4), **characterized in that** the high-pressure circuit comprises, at the condenser (5) of said separator/condenser assembly, a condenser water circulation and cooling loop (6) comprising a tapping (7) on the condenser, a cooling air/water exchanger (8), a condenser circulation pump (9) and a spray nozzle means (10) feeding back to the condenser.

2. Absorption cooling system according to Claim 1 for which the separator/condenser assembly comprises a separation chamber (11) and a condensation receptacle (12), the condensation receptacle being positioned in the separation chamber.

3. Absorption cooling system according to Claim 2 for which the spray nozzle means (10) feeding back to the condenser opens into the separation chamber (11).

4. Absorption cooling system according to Claim 3 for which the condensation receptacle (12) is positioned above a pool of liquid at the bottom of the separation chamber (11), the spray nozzle means being positioned above the receptacle.

5. Absorption cooling system according to any one of the preceding claims for which the separation chamber is fed by a heating circuit comprising a heating loop (13) for heating a binary solution kept liquid, provided with an outlet tapping (14) on the separator, a heating circuit pump (15), at least one heat exchanger (16a, 16b) linked with at least one of the cooling circuit (R) of the heat engine and exhaust (E) of the heat engine and an inlet tapping (18) on the separator.

6. Absorption cooling system according to Claim 5 for which the separation chamber (11) is suitable for boiling the binary solution.

7. Absorption cooling system according to any one of the preceding claims for which the condenser water circulation and cooling loop (6) comprises a branch (19) to the low-pressure circuit controlled by a solenoid valve (20) feeding the low-pressure circuit.

8. Absorption cooling system according to Claim 7 for which the solenoid valve (20) feeding the low-pressure circuit is positioned downstream of the condenser circulation pump (9).

9. Absorption cooling system according to Claim 7 or 8 for which the low-pressure circuit (2) provided with the evaporator/absorber assembly (4) comprises an absorber liquid circulation loop (26) provided with a tapping (27) on the absorber, an absorber circulation pump (28), a cooling air/water exchanger (29) and a spray nozzle means (30) feeding back to the absorber.

10. Absorption cooling system according to Claim 9 for which the absorber liquid circulation loop (26) comprises a branch (31) to the heating circuit controlled by a solenoid valve (32) feeding the high-pressure circuit.

11. Absorption cooling system according to Claim 10 for which the solenoid valve (32) feeding the high-pressure circuit is positioned downstream of the absorber circulation pump (28).

12. Absorption cooling system according to Claims 5 and 10 for which the solenoid valve (32) feeding the high-pressure circuit is positioned between the absorber circulation pump (28) and the heating circuit pump (15).

13. Absorption cooling system according to any one of the preceding claims for which the low-pressure circuit comprises an evaporator water circulation loop (21) comprising a tapping (22) at the evaporator outlet, an evaporator circulation pump (23) and an evaporator spray nozzle (25).

14. Absorption cooling system according to Claims 8 and 13 for which the solenoid valve (20) feeding the low-pressure circuit is positioned between the condenser circulation pump (9) and the evaporator circulation pump (23).

15. Method for controlling an absorption cooling system, said system comprising a high-pressure circuit (1) provided with a separator/condenser assembly (3), a low-pressure circuit (2) provided with an evaporator/ absorber assembly (4), the high-pressure circuit comprising a condenser water circulation and cooling loop (6) provided with a cooling air/water exchanger (8), a condenser circulation pump (9) and a spray nozzle means (10) in the return branch of the condenser (5) from said separator/condenser assembly (3), the low-pressure circuit comprising an evaporator water circulation loop (21) comprising an evaporator circulation pump (23) and a spray nozzle means (25), the condenser water circulation and cooling loop (6) comprising a branch (19), to the evaporator water circulation loop, provided with a solenoid valve (20) feeding the low-pressure circuit and positioned between the outlet of the condenser circulation pump (9) and the outlet of the evaporator circulation pump (23), **characterized in that** the liquid of the condenser water circulation and cooling loop (6) of the high-pressure circuit is made to circulate by feeding the condenser circulation pump (9) and the liquid of the evaporator water circulation loop (21) is made to circulate by feeding the evaporator circulation pump (23), solenoid valve (20) feeding the low-pressure circuit closed, and **in that** the low-pressure circuit is fed from the high-pressure circuit by opening the solenoid valve (20) feeding the low-pressure circuit.

16. Method for controlling an absorption cooling system according to Claim 15 for which, to feed the low-pressure circuit and transfer water from the condenser water cooling and circulation loop (6) to the evaporator water circulation loop (21), the solenoid valve (20) is opened and the pressure of the condenser circulation pump (9) is kept higher than the pressure of the evaporator circulation pump (23) while the solenoid valve (20) is open.

17. Method for controlling an absorption cooling system, said system comprising a high-pressure circuit (1) provided with a separator/condenser assembly (3), a low-pressure circuit (2) provided with an evaporator/ absorber assembly (4), the separator/condenser assembly comprising a separation chamber (11) fed by a heating circuit comprising a heating loop (13) for a separator binary solution kept liquid and provided with an outlet tapping (14) on the separator, a heating circuit pump (15), at least one heat exchanger (16a, 16b) linked with at least one of the cooling circuit (R) of the heat engine and exhaust (E) of the heat engine and an inlet tapping (18) on the separator, the low-pressure circuit comprising an absorber liquid circulation loop (26) provided with a tapping (27) on the absorber, an absorber circulation pump (28) of a cooling air/water exchanger (29) and a spray nozzle means (30) feeding back to the absorber, the absorber liquid circulation loop (26) comprising a branch (31) to the heating circuit controlled by a solenoid valve (32) feeding the heating circuit and positioned between the outlet of the absorber circulation pump (28) and the outlet of the heating circuit pump (15), **characterized in that** the liquid of the heating loop (13) of the high-pressure circuit is made to circulate by feeding the heating circuit pump (15) and the liquid of the absorber liquid circulation loop (26) is made to circulate by feeding the absorber circulation pump (28), solenoid valve (32) feeding the low-pressure circuit closed, and **in that** the high-pressure circuit (1) is fed from the low-pressure circuit (2) by opening the solenoid valve (32) feeding the high-pressure circuit while keeping the pressure of the absorber circulation pump (28) higher than the pressure of the heating circuit pump (15) while the solenoid valve (32) feeding the heating circuit is open.
